# EUROPEAN PATENT APPLICATION

(11) **EP 4 371 654 A1**
(43) Date of publication of application: **22.05.2024**
(21) Application number: 23209772.5
(22) Date of filing: 14.11.2023
(51) Int. Cl.: B01D 71/02, B01D 63/02, B01D 63/06, B01D 63/08, B01D 63/10, C02F 1/00, C02F 1/44, B01D 61/18

(54) **DEVICES AND METHODS UTILIZING CARBON NANOTUBE MEMBRANE FILTRATION**

(30) Priority: 18.11.2022 US 202263384340 P; 03.11.2023 US 202318501778
(71) Applicant: Kohler Co., Kohler, WI 53044 (US)
(72) Inventor: ZHANG, Yunjie, Kohler, 53044 (US); KWACZ, Jason, Kohler, 53044 (US); KAJUCH, Pete, Kohler, 53044 (US)
(74) Representative: Barker Brettell LLP

(57) **Abstract**

CNT membrane filter cartridges and residential and commercial filtration applications for CNT membrane filter cartridges. CNT filtration can create both a high purity water stream, as well as a concentrated feed stream. CNT membrane filter cartridges can improve the mechanics of water transport, while high selectivity is achieved without sacrificing permeability. This benefit translates to allowing ultrafiltration technology to be implemented within a smaller footprint or reducing the need for driving energy.

## Description

### RELATED APPLICATIONS

This application claims the benefit of U.S. Provisional Application 63/384,340, filed November 18, 2022, and U.S. Patent Application 18/501,778, filed November 3, 2023, which are incorporated herein by reference in their entirety.

### TECHNICAL FIELD

The present disclosure relates generally to carbon nanotubes, and more specifically, examples are directed to applications for the treatment of water utilizing carbon nanotube filtration technology.

### BACKGROUND

In recent years, the concern for water purity has grown to a high level among consumers. This growth is partially the result of health trends such as a shift from soda consumption to water, improved hydration and the removal of toxins from the body. Furthermore, consumer education regarding drinking water purity, including efforts to eradicate waterborne illnesses, has expanded, particularly in underdeveloped regions.

Present day technologies, while effective to certain extents, have characteristics which are sought to be improved. Cartridge filtration systems may improve taste and remove sediment (even cysts and volatile organic compounds (VOCs)). The best filtration is typically realized with two or more stages. However, cartridge filtration systems are a consumable product that must be discarded after a period of use, which can be costly. For example, reverse osmosis systems produce high purity water. However, reverse osmosis is typically a four stage or more system with an efficiency of approximately 25% which means that for every gallon of high purity water produced, four gallons of water are consumed.

A method commonly known as the hollow fiber method may be utilized to remove bacteria, viruses, and a host of impurities (e.g., down to .02 micron,) and can be back-flushed to improve lifespan. While becoming increasingly popular for consumer products and municipal treatment facilities, the method can be cost prohibitive.

Ion exchange is mostly used to remove minerals, salts, and chlorides, but does not purify any further. While ion exchange may be an effective solution for water free of bacteria (such as well water), such reservoirs may contain VOCs, heavy metals, radium etc. which requires additional process(es) of removal.

Various membrane technologies exist for ultra-filtration including membranes produced from polyvinylidene fluoride (PVDF), polysulphone, etc. Because these ultra-filtration membranes function based on using pore size for exclusion of unwanted particles these technologies have the limitation of balancing high-water permeability against fine separation and selectivity. As pore diameter decreases and selectivity improves, resistance increases and water permeability declines.

Thus, there is a present need for improved filtration technology and applications utilizing the improved technology.

### SUMMARY

Carbon nanotube (CNT) filtration technology has become of interest because it overcomes many of the deficiencies of other filtration technologies. CNT filtration utilizes membranes formed of a plurality of CNTs, which are tubes made of carbon with diameters typically measured in nanometers. The longitudinal axes of the CNTs may be oriented substantially parallel to each other, for example, in direction corresponding to a thickness of the membrane by electrokinetic alignment, or may be randomly oriented or oriented in different directions. In one example, the CNTs extend through a thickness of the membrane, in which a first end of each of the CNTs terminates at a first surface of the membrane, and a second end terminates at a second surface of the membrane.

A major strength of using CNT membranes is the improvement in the mechanics of water transport, meaning it can achieve high selectivity without sacrificing permeability. This benefit translates to allowing ultra-filtration technology to be implemented for many applications within a smaller footprint or reducing the need for driving energy, such as, for example, the need for pumps. It has the potential to expand into applications that would be infeasible or impractical with other membrane types. Finally, CNT filtration has the potential to remove all impurities with higher flux (flow efficiency), more compact size, regeneration to extend durability and lower cost to operate. With these efficiencies, new applications can be realized.

Various examples disclosed herein relate to CNT filtration applications and, more particularly, various CNT-based membrane cartridge examples for purification and concentration filtration applications. Various examples disclosed herein also relate to methods and applications of generating CNT-based membrane structures to facilitate more efficient aqueous filtration and water transport due to its high selectivity without sacrificing permeability.

In examples, a CNT-based filter may comprise a membrane assembly sized for a suitable cartridge and formed of a plurality of membranes, the membranes formed of a plurality of electrokinetically aligned CNTs, each membrane forming a hollow fiber with a circular cross-section. The CNTs extend across a thickness of the membrane, such that a first end of each CNT terminates at a first surface of the membrane, and a second end of each CNT terminates at a second surface of the membrane.

In alternative examples, a CNT-based filter may comprise a membrane assembly sized for a suitable cartridge and formed of a plurality of membranes, the membranes formed of a plurality of electrokinetically aligned CNTs, each membrane forming a hollow fiber having a cross section that is an equilateral triangle. The CNTs extend across a thickness of the membrane, such that a first end of each CNT terminates at a first surface of the membrane, and a second end of each CNT terminates at a second surface of the membrane.

In alternative examples, a CNT-based filter may comprise a membrane assembly sized for a suitable cartridge and formed of a plurality of membranes, the membranes formed of a plurality of electrokinetically aligned CNTs, each membrane forming a hollow fiber having a cross section that is an isosceles triangle. The CNTs extend across a thickness of the membrane, such that a first end of each CNT terminates at a first surface of the membrane, and a second end of each CNT terminates at a second surface of the membrane.

In yet another example, a CNT-based filter may comprise a membrane assembly sized for a suitable cartridge, and formed of any combination of membranes, the membranes formed of a plurality of electrokinetically aligned CNTs, the membranes forming hollow fibers with circular, equilateral triangular, spiral, and/or isosceles triangular cross sections as well as numerous other geometries. The CNTs extend across a thickness of the membrane, such that a first end of each CNT terminates at a first surface of the membrane, and a second end of each CNT terminates at a second surface of the membrane.

In alternative examples, a CNT-based filter may comprise a membrane assembly sized for a suitable cartridge and forming a leaf pattern with an elongated cross section, and forming a pleat. In said example, the leaf pattern uses a continuous sheet formed of a plurality of CNTs. The sheet may be folded multiple times, thus generating the "leaves" within the CNT-based membrane of the filter. In examples, three-dimensional spacers or conventional water filtration spacers on the membrane surface provides proper spacing between folds within the CNT-based membrane when the sheet is folded. In alternative examples, a CNT-based filter may comprise a leaf pattern utilizing a spiral module within the dimensions of a suitable cartridge. In said example, the leaves used are individual leaves spaced throughout the dimensions of a suitable cartridge.

In alternative examples, a CNT-based filter may comprise a membrane assembly sized for a suitable cartridge in which the membrane assembly may comprise a plurality of membranes having a plurality of electrokinetically aligned CNTs thereon stacked together forming layers.

In examples, CNT-based filters, as described herein, may be utilized in a variety of applications. CNT filtration creates very high purity water, with most ions, metals, inorganic, organic, and biological contaminants stripped away. One specific contaminant can comprise per- and polyfluoroalkyl substances (PFAS or PFASs) which are a group of synthetic organofluorine chemical compounds. Furthermore, the higher flux capabilities of CNT-based membranes allow this filtration to happen on-site, meaning high purity water can be generated at the point of use. These applications can be residential or commercial.

In examples, CNT-based filtration may be implemented with a focus on purification applications for non-industrial uses. In examples, the CNT-based filtration provides purification for a drinking/consumption aspect at the consumer level. In examples, for example, CNT-based filtration membranes may be implemented within faucets, fountains, bottler filler, refrigerator and/or freezer units, water reservoirs, or any of a variety of water dispensing applications. In other examples, CNT-based filtration provides purification for cleaning aspects directed to the consumer. In examples, for example, CNT-based membrane filters may be implemented within steam generation units, humidifiers, water heaters, shower heads, toilets, urinals, bidets, greywater treatment systems, a variety of faucets (kitchen/lavatory/bath/shower/etc.), and more. In examples, CNT-based filtration can help reduce mineral buildup and scaling deposits in these applications. In other examples, the resulting filtered water or water-based solutions may provide more effective/efficient cleaning solutions for residential and commercial purposes, as potential chemicals/minerals are extracted from the water, which leaves behind little to no smears/spots during use.

In examples, CNT-based filtration may be implemented with a focus on concentration applications. In examples, the concentrated feed stream may be of greater interest than the purification of the stream. In examples, CNT filtration may be implemented within food and beverage processes. For example, CNT filtration may be implemented into the distillation process, enabling the concentration of sprits without heat. In examples, CNT filtration may be implemented into the food product concentration process. As removal of water/liquid and/or the reduction of water/liquid activity can be a crucial step in the creation of some food products, CNT filtration may be utilized as a pretreatment or primary treatment step in these processes. Such application may provide a gentler and less energy intensive way to concentrate than thermal methods.

The above summary is not intended to describe each illustrated example or every implementation of the subject matter hereof. The figures and the detailed description that follow more particularly exemplify various examples.

### BRIEF DESCRITPION OF THE DRAWINGS

Subject matter hereof may be more completely understood in consideration of the following detailed description of various examples in connection with the accompanying figures, in which:
FIG. 1 illustrates a cross-sectional view of a CNT filter cartridge including a plurality of CNT membranes, each membrane formed into a circular cross section, according to an example.
FIG. 2 illustrates a cross-sectional view of a CNT filter cartridge including a plurality of CNT membranes, each membrane formed into a cross section defining an equilateral triangle, according to an example.
FIG. 3 illustrates a cross-sectional view of a CNT filter cartridge including plurality of CNT membranes, each membrane forming into a cross section defining an isosceles triangle, according to an example.
FIG. 4A illustrates a cross-sectional view of a CNT filter cartridge including a membrane forming a leaf pattern, according to an example.
FIG. 4B illustrates an enhanced view of the membrane of FIG. 4A.
FIG. 5A illustrates a cross-sectional view of CNT filter cartridge including a leaf pattern CNT membrane with spiral module(s).
FIG. 5B illustrates an enhanced view of the membrane of FIG. 5B.
FIG. 6 illustrates a perspective view of a CNT filter cartridge formed of the spiral module(s) of FIG. 5A, according to an example.
FIG. 7 illustrates a cross-sectional view of a CNT filter cartridge formed of a plurality of CNT membranes stacked together with or without spacers to form layers, according to an example.
FIG. 8 illustrates a cartridge assembly, according to another example.
FIG. 9 illustrates a top view of a cartridge assembly, according to an example.
FIGS. 10A and 10B illustrate another top view of a cartridge assembly, according to an example.
FIG. 11 illustrates an external view of a cartridge assembly, according to an example.

While various examples are amenable to various modifications and alternative forms, specifics thereof have been shown by way of example in the drawings and will be described in detail. It should be understood, however, that the intention is not to limit the claimed inventions to the particular examples described. On the contrary, the intention is to cover all modifications, equivalents, and alternatives falling within the spirit and scope of the subject matter as defined by the claims.

### DETAILED DESCRIPTION OF THE DRAWINGS

As mentioned above, CNT technology may potentially replace or supplement conventional filtration or purification methods, such as cartridge filtration (carbon, paper or sand), membrane filtration (reverse osmosis and hollow fiber PVDF), and ion exchange treatment (water softener). For example, CNT filtration technology has the potential to separate water molecules from impurities such as bacteria and pharmaceuticals below 0.01-micron (10nm) size, without sacrificing permeability, allowing ultra-filtration technology to be implemented within a smaller footprint or reducing the need for driving energy (pumps). It has the potential to expand into applications that would be infeasible or impractical with other membrane types.

CNT filtration technology based on filter cartridges using CNT membranes has the potential to remove all impurities with higher flux (flow efficiency), more compact size, regeneration to extend durability and lower cost to operate. With these efficiencies, new applications can be realized. Below are a variety of examples describing the various applications utilizing CNTs.

As used herein, CNF filtration technology can be used to filter fluids including liquids, air, gels, suspensions, solutions, or any of a variety of fluids. Liquids or fluids may be used herein for sake of efficiency and without limitation.

### DEFINITIONS

As used herein, each of the following terms has the meaning associated with it in this section.

Unless defined otherwise, all technical and scientific terms used herein have the same meaning as commonly understood by one of ordinary skill in the art to which this invention belongs. Although any methods and materials similar or equivalent to those described herein can be used in the practice or testing of the present invention, exemplary methods and materials are described.

As used herein, the articles "a" and "an" refer to one or to more than one (i.e., to at least one) of the grammatical object of the article. By way of example, "an element" means one element or more than one element.

As used herein, the term "about" is understood by persons of ordinary skill in the art and varies to some extent on the context in which it is used. As used herein when referring to a measurable value such as an amount, a temporal duration, and the like, the term "about" is meant to encompass variations of ±20% or ±10%, more preferably ±5%, even more preferably ±1%, and still more preferably ±0.1% from the specified value, as such variations are appropriate to perform the disclosed methods.

As used herein "Residential Applications" include, but are not limited to, single- and/or multi-family dwellings, which can include homes, duplexes, apartments, and condominiums used primarily for personal, family, and/or household purposes. "Commercial Applications" include, but are not limited to, hospitals, medical offices, medical clinics, lodges, resorts, hotels, motels, and other lodging establishments, foodservices or food preparation or establishments which include foodservices or food preparation, such as, but not limited to, restaurants, business parks, business campuses, educational institutions (e.g., schools, colleges, campuses, universities, etc.), shopping facilities, and/or places of public assembly (e.g., churches, sporting facilities, theaters, concert venues, convention centers, etc.).

### CNT APPLICATIONS

Applications for CNT filtration, as provided herein, can be based around the generated product. The filtration process can create a high purity liquid/water stream, and/or a concentrated feed stream. Therefore, CNT filtration, utilizing the CNT membrane structure examples as described *infra,* may be used for the purification and/or the concentration of substances, which presents numerous beneficial possibilities within a variety of applications.

In examples related to purification applications, CNT filtration creates very high purity liquid/water, with most ions and all organic & biological contaminants stripped away. The higher flux capabilities of the CNT membrane allow this filtration to happen on-site where this high purity liquid/water can be generated at the point of use. These applications can be residential or commercial.

In examples, CNT filtration may be focused on drinking/consumption applications utilizing CNT technology. In examples, CNT filtration examples may be utilized in a kitchen faucet level purification system (i.e. CNT filtration within the faucet itself or in the faucet circuit). The flow pressure from the faucet provides increased flow rate through the filter/membranes, which offers sufficient water flow pressure for use directly from tap. Similarly, a CNT filter may be incorporated into various drinking fountains, bottle filler, refrigerator water dispensers and other various liquid/water dispensing mechanisms. A CNT filter may be incorporated anywhere along the water delivery system to clean/filter the liquid/water before reaching the consumer and variations on all applications that incorporate self-cleaning and backflushing. While such example may be similar to an existing Aquifer RO system, no tank/reservoir would be required upon implementation of the disclosed CNT filtration examples.

In examples, CNT filtration examples may be utilized in artesian water generation. While CNT filtration systems provide high purity liquids/water, certain CNT filtration systems contain side effects, which result in the liquid/water lacking most ions and elements that provide taste to the consumer. However, the high selectivity of the CNT filtration examples as described may be leveraged to create artesian water within a countertop water dispensing device, utilizing a balance of electrolytes that provide distinguishing tastes. Thus, this solution straight from the countertop may reduce plastic waste (i.e. from bottled water) and may reduce the carbon footprint for its transportation.

In examples, CNT filtration, as described herein, may be utilized in gravity filters and may be combined with water reservoirs. The hydrostatic pressure of the water in the reservoir drives water flow through the filter. This can be used indoors or outdoors where tap water is not available. This is particularly valuable in areas where the only source of water is unclean surface water.

In examples, CNT filtration may be focused on cleaning applications. In examples, CNT filtration examples may be implemented in steam generation baths, humidifiers, etc. to prevent or reduce minerals from calcifying heater elements. In examples, CNTs may be implemented within water heaters, either tank or tank-less, to reduce or prevent scaling deposits. CNT filter elements may be included anywhere along the water delivery line for the same/similar benefits as provided herein. In addition, CNT filtration can be used as part or the main technology employed in Point-of-Use or Point-of-Entry greywater systems.

In examples, CNT filtration examples may be built into shower heads, wherein the CNT filter may be activated to utilize the shower head to spray down and clean various elements, such as the tub, glass shower enclosure, etc. In examples the CNT filter may be deactivated for normal showering purposes. Built in CNT filters may include backwash control which reverses water flow to the filter for cleaning and discharges into the bathing space. The CNT filter may be incorporated along the water delivery system, such as placing the CNT filter at the aerator, within the faucet, and/or prior to the faucet.

In examples, similar to the implementation within shower heads, CNT filtration examples may be built into a kitchen faucet head and activated to spray down and clean deposits on sinks and deactivated for otherwise normal use. Built in CNT filters may include backwash control which reverses water flow to the filter for cleaning and discharges into the sink. The CNT filter may be incorporated along the water delivery system, such as placing the CNT filter at the aerator, within the faucet, and/or prior to the faucet. In examples, a CNT filter may be incorporated into a lavatory sink or bath faucet for the same/similar benefits as provided herein.

In examples, CNT filtration examples may provide water softening without the requirement of additional chemicals or with reduced amounts of additional chemicals. CNT filtration examples may be deployed on the whole home level and/or in specific applications, preferably where low/zero hard water would be a great benefit. Such specific locations, for example, near washing machines, baths, showers, etc., which may further increase the lathering ability of soaps and detergents (i.e. reducing water hardness).

Among concentration applications, in examples focused on food and beverage processes utilizing CNT technology, there may be enhanced beneficial possibilities in a variety of applications. For example, CNT filtration examples may be effectively utilized in the distillation and filtration processes to concentrate spirits without heating. CNT filtration examples may be used at any point in the distillation process with multiple distillation steps. In examples, the CNT filtration may be used as either a pretreatment step, polishing step, or both.

In examples, CNT filtration examples may be utilized within food production concentration, wherein the removal of liquid/water and/or reduction of liquid/water activity is a crucial step in the creation of certain food products, such as the reduction of liquid/water activity for the preservation of foods. In examples, CNT filtration may be used as a pretreatment or primary treatment step in these processes and may be a gentler and less energy intensive approach to concentrate than thermal methods.

### CNT FILTER CARTRIDGES

CNT membranes for use in filter cartridges and filtration technology can come in a variety of shapes, sizes, and structures and may be suitably dimensioned to be implemented into a variety of filtration applications as described above. Continuous backflushing, intermittent backflushing using control valves and / or solenoid valves & no backflushing may be employed on all filter cartridges and filtration technology. The water inlet and water outlet may be used interchangeably within all filter cartridges.

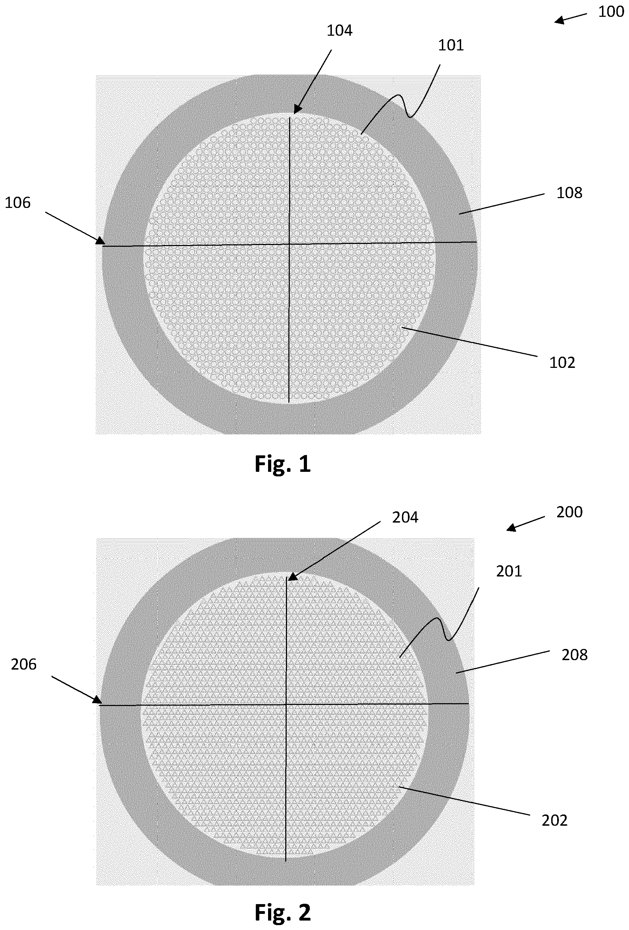

Referring to FIG. 1, a CNT filter cartridge 100 for use in filtration comprises a circular pattern CNT membrane ("CP CNT membrane") cartridge. More specifically, CP CNT membrane filter cartridge 100 may include a CP CNT membrane assembly 101 comprising a plurality of CNT membranes 102 in the form of hollow fibers positioned within a cartridge frame 108. Each CNT membrane 102 has a substantially circular cross section, and is generally oriented in a direction corresponding to a thickness of the membrane assembly (i.e. a longitudinal axis of the CNT membrane extends out of the page). A plurality of CNTs (not shown) electrokinetically oriented forms each membrane 102 and extends through a thickness of membrane 102. Membrane assembly 101 may have a spacing between CNT membranes 102 of from about 0.05 mm to about 0.5 mm, and more specifically, about 0.1 mm, and each membrane 102 may have a membrane thickness of from about 0.001 inch to about 0.010 inch, and more specifically about 0.005 inches.

In examples, The CP CNT membrane cartridge 100 may have an inside diameter 104 of from about 1.0 to about 10 inches, and more specifically about 1.75 inches (about 44.45 mm), and an outside diameter 106 of from about 2.0 inches to about 2.5 inches, and more specifically about 2.25 inches (about 57.15 mm). The CP CNT 100 cartridge may have a working length of about 1 to about 30 inches, and more specifically, about 5 to about 20 inches, and more specifically, about 11 inches (about 279.4 mm).

Within the membrane assembly 101, a total number of CNT membranes 102 may comprise over 1400 with a total target surface area of all CNT membranes 102 totaling about 1.4 m squared (about 1,400,000 mm squared). In one non-limiting example, a single CNT membrane 102 may have a diameter of from about 0.1 mm to 2 mm, and more specifically about 1 mm (a radius of about 0.5mm), a surface area of about 877.32 mm squared, a cross-sectional area of about 0.79 mm squared. A percentage of void space of membrane assembly 101 can be from about 15% to about 50%.

Referring to FIG. 2, according to another example, a CNT filter cartridge 200 for use in filtration technology comprises an equilateral triangle pattern CNT membrane ("ET CNT membrane") cartridge. In examples, ET CNT membrane filter cartridge 200 may include a membrane assembly 201 comprising a plurality of CNT membranes 202 in the form of hollow fibers positioned within a cartridge frame 208. Each CNT membrane 202 has a cross section comprising an equilateral triangle, and is generally oriented in a direction corresponding to a thickness of the membrane assembly 202 (i.e. a longitudinal axis of the CNT membrane extends out of the page). A plurality of CNTs (not shown) electrokinetically oriented forms each membrane 202 and extends through a thickness of membrane 202. In one non-limiting example, each equilateral triangular CNT membrane 202 may have side lengths equivalent to about 1.00 mm, a base length of about 1.00 mm and a height of about 0.87 mm.

In examples, ET CNT membrane cartridge 200 may have an inside diameter 204 of from about 1.0 to about 2.5 inches, and more specifically about 1.75 inches (about 44.45 mm), and an outside diameter 206 of from about 2.0 inches to about 2.5 inches, and more specifically about 2.25 inches (about 57.15 mm). The ET CNT membrane cartridge 200 may have a working length of about 8 to about 14 inches, and more specifically, about 11 inches (about 279.4 mm). In this non-limiting example, ET CNT membrane cartridge 200 may contain a cross-sectional area of about 2.4 to 2.5 inches squared.

Within membrane assembly 201, a total number of CNT membranes 202 may comprise over 1500 with a total target surface area of CNT membranes 202 totaling about 1.4 m squared (about 1,400,000 mm squared). A percentage of void space of membrane assembly 201 can be from about 15% to about 50%.

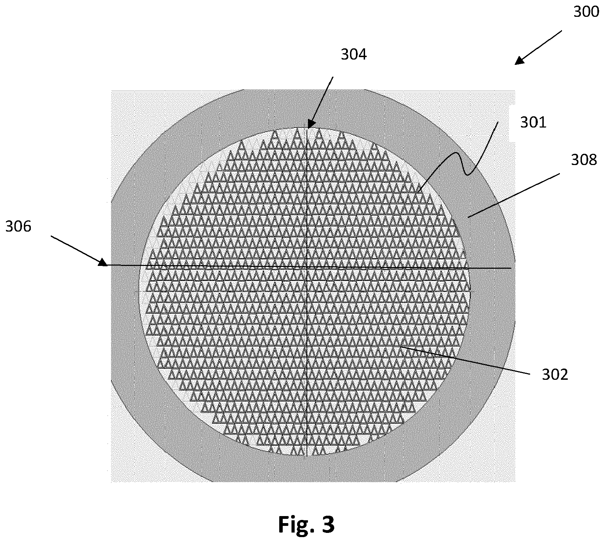

Referring to FIG. 3, according to another example, a CNT filter cartridge 300 for use in filtration technology comprises an isosceles triangle pattern CNT membrane ("IT CNT membrane") cartridge. In examples, IT CNT membrane filter cartridge 300 may include a membrane assembly 301 comprising a plurality of CNT membranes 302 in the form of hollow fibers positioned within a cartridge frame 308. Each CNT membrane 302 has a cross section comprising an isosceles triangle, and is generally oriented in a direction corresponding to a thickness of the membrane assembly 302 (i.e. a longitudinal axis of the CNT membrane extends out of the page). A plurality of CNTs (not shown) electrokinetically oriented forms each membrane 302 and extends through a thickness of membrane 302. In one non-limiting example, each isosceles triangular membrane 302 may have side lengths equivalent to about 1.50 mm, a base length of about 1.00 mm and a height of about 1.41 mm.

In examples, IT CNT membrane filter cartridge 300 may have an inside diameter 304 of from about 1.0 to about 2.5 inches, and more specifically about 1.75 inches (about 44.45 mm), and an outside diameter 306 of from about 2.0 inches to about 2.5 inches, and more specifically about 2.25 inches (about 57.15 mm). The IT CNT membrane filter cartridge 300 may have a working length of about 8 to about 14 inches, and more specifically, about 11 inches (about 279.4 mm). In this non-limiting example, IT CNT membrane filter cartridge 300 may contain a cross-sectional area of about 2.4 to 2.5 inches squared.

Within the membrane assembly 301, a total number of CNT membranes 302 may comprise over 1000 with a total target surface area of CNTs 302 totaling about 1.4 m squared (about 1,400,000 mm squared). A percentage of void space of membrane assembly 301 can be from about 15% to about 50%.

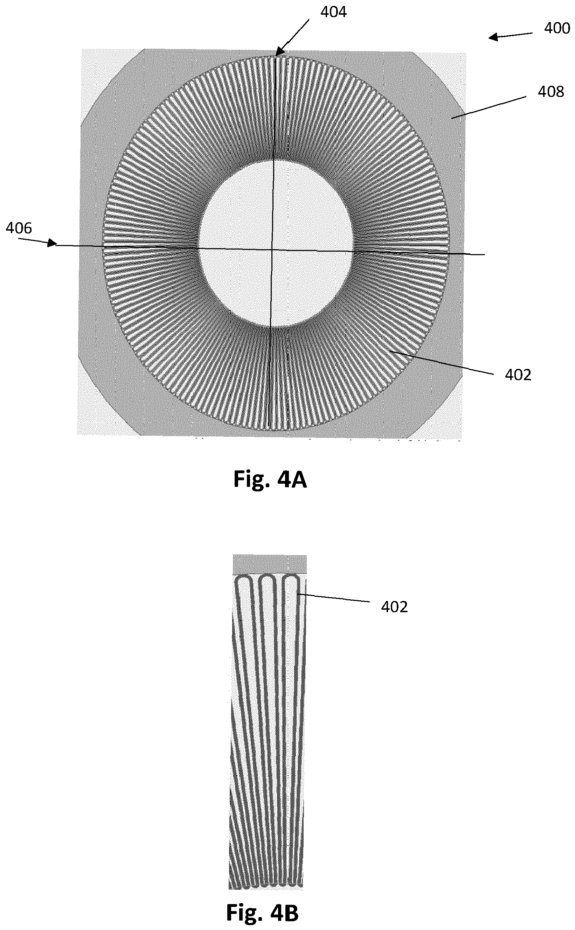

Referring to FIGS. 4A and 4B, according to another example, a CNT filter cartridge 400 for use in filtration technology comprises a leaf pattern CNT membrane ("L CNT membrane") cartridge 400 utilizing a continuously pleated L CNT membrane 401 positioned within a cartridge frame 408. A plurality of CNTs (not shown) electrokinetically oriented forms each membrane 402 and extends through a thickness of membrane 402. In examples, continuously pleated membrane 401 may be folded multiple times, effectively producing a plurality of leaf pleats 402 (more clearly illustrated in FIG. 4B), enabling water permeation to be in either an inward direction (to the center of the L CNT membrane 401) or outward direction. Spacers (not shown) on the surface of L CNT membrane 401 provide sufficient spacing between all pleats 402 when the membrane 401 is folded. The spacers may be conventional water filtration spacers or three-dimensional printed spacers. In one non-limiting example, each generated pleat may be about 0.127 mm (about 0.005 inches) thick.

In examples, L CNT membrane filter cartridge 400 may have an inside diameter 404 of from about 1.0 to about 2.5 inches, and more specifically about 1.75 inches (about 44.45 mm), and an outside diameter 406 of from about 2.0 inches to about 2.5 inches, and more specifically about 2.25 inches (about 57.15 mm). The L CNT membrane filter cartridge 400 may have a working length of about 8 to about 14 inches, and more specifically, about 11 inches (about 279.4 mm). In this non-limiting example, L CNT membrane filter cartridge 400 may contain a cross-sectional area of about 2.4 to 2.5 inches squared.

In examples, within L CNT membrane 401, a total number of leaf pleats 402 may comprise over 150 pleats with a total target surface area of all of the leaf pleats 402 totaling about 1.4 m squared (about 1,400,000 mm squared). A single leaf pleat may have a surface area of about 7000 mm squared or more. A percentage of void space of membrane 402 may be from about 15% to about 50%.

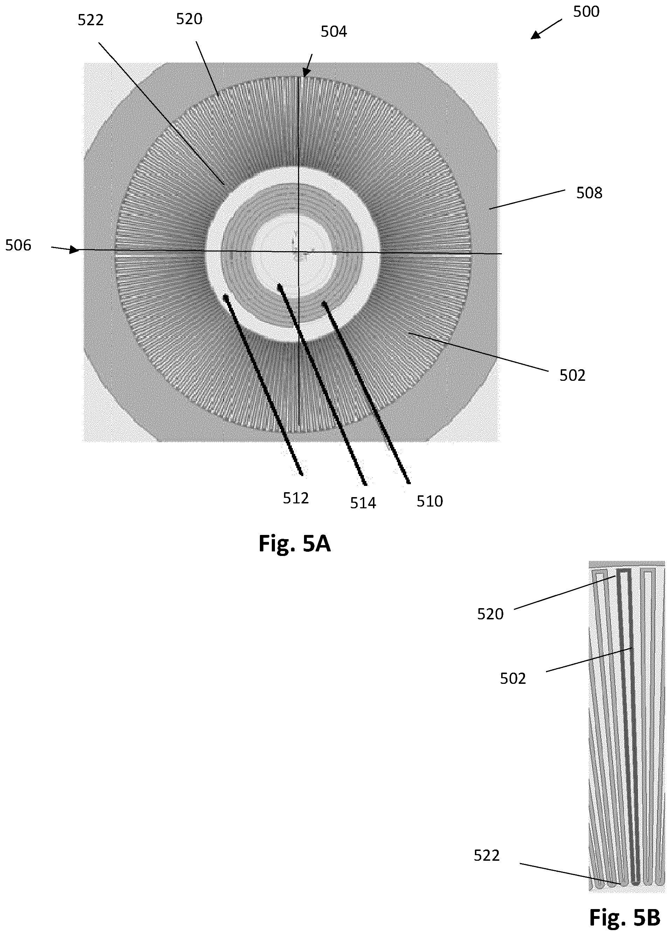

Referring to FIGs. 5A and 5B, a CNT filter cartridge 500 for use in filtration applications comprises a leaf pattern CNT membrane with spiral module(s) ("LS CNT membrane") cartridge. In examples, the LS CNT membrane filter cartridge 500 comprises a membrane having individual leaves 502 (more clearly illustrated on FIG. 5B), and spacers (not shown) on the membrane surface to provide the spacing between leaves 502 and within leaves 502 (permeate). A plurality of CNTs (not shown) electrokinetically oriented forms membrane 502 and extends through a thickness of membrane 502. The spacers may be conventional water filtration spacers or three-dimensional printed spacers.

In examples, the LS CNT membrane filter cartridge 500, from the outer edges inward, comprises cartridge frame 508, a plurality of leaves 502, structure defining a space 512 for a tubular structure to be positioned therein to support the plurality of leaves 502, a spiral member 510, and structure defining a space 514 for permeate to pass through. In one non-limiting example, each leaf 502 considered may be about 0.500011 mm thick at the outer edges/top side 520 of the LS CNT membrane filter cartridge 500 and about 0.3 mm thick at the inner edges/bottom side 522 of the LS CNT membrane filter cartridge 500. In one non-limiting example, the spacing between individual leaves are about 0.303545 mm thick at the outer edges/top side 520 of the LS CNT filter membrane cartridge 500 and about 0.01 mm thick at the inner edges/bottom side 522 of the LS CNT membrane filter cartridge 500.

In examples, LS CNT membrane filter cartridge 500 may have an inside diameter 504 of from about 1.0 to about 2.5 inches, and more specifically about 1.75 inches (about 44.45 mm), and an outside diameter 506 of from about 2.0 inches to about 2.5 inches, and more specifically about 2.25 inches (about 57.15 mm). The LS CNT membrane filter cartridge 500 may have a working length of about 8 to about 14 inches, and more specifically, about 11 inches (about 279.4 mm). In this non-limiting example, LS CNT membrane filter cartridge 500 may contain a cross-sectional area of about 2.4 to 2.5 inches squared.

In examples, within LS CNT membrane 501, a total number of leaves 502 may comprise over 150 membranes (for example, about 173 membranes) with a total target surface area of all leaves 502 totaling about 1.4 m squared (about 1,400,000 mm squared). A single leaf 502 may have a surface area of about 6000 mm squared or more. A total surface area of central spiral membrane can be about 70,000 mm squared or more. In examples, a diameter of inside space 514 can be from about 20 to about 30 mm.

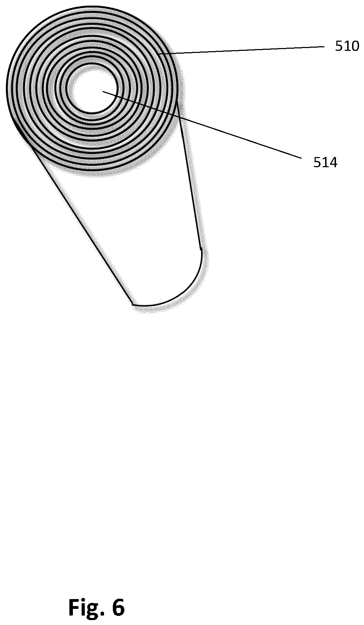

Referring to FIG. 6, a filter cartridge 600 includes spiral member 510 of the LS CNT membrane cartridge 500 of FIG. 5A and 5B, according to one embodiment. In examples, a total surface area of central spiral member 510 can be about 70,000 mm squared or more. In examples, a diameter of inside space 514 can be from about 20 to about 30 mm. The spiral member 510 is a membrane sheet of carbon nanotubes extending through a thickness of spiral member 510 and is formed by rolling or coiling the membrane sheet within the frame of the filter cartridge 500. The LS CNT filter cartridge 500 comprises a membrane having individual leaves 502 (illustrated on FIG. 5B), and spacers (not shown) on the membrane surface to provide the spacing between leaves 502 and within leaves 502 (permeate). The spacers may be conventional water filtration spacers or three-dimensional printed spacers. In an embodiment, spiral member 510 is the sole membrane within a filter cartridge.

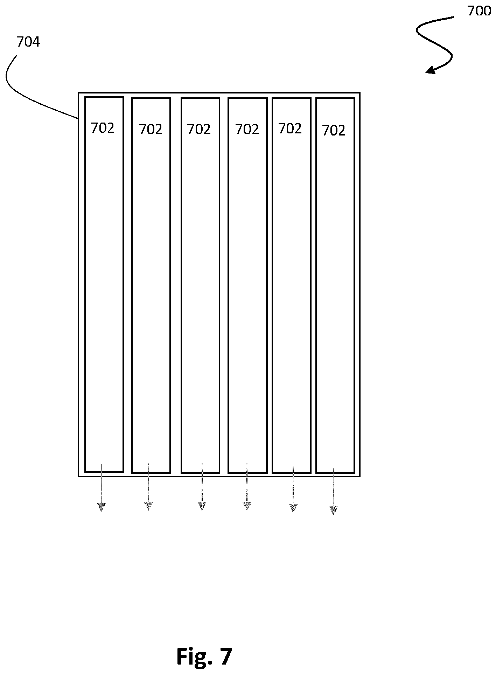

Referring to FIG. 7, a filter cartridge 704 includes a plurality of CNT membranes 702 formed as a stack or layers. A plurality of CNTs (not shown) electrokinetically oriented forms each membrane 702 and extends through a thickness of membrane 702. As fluid 700 moves though filter cartridge 704, it moves along and through one or more membranes 702, where it is treated, and then exits filter cartridge 704. Spacers (not shown) on the membrane surface can provide spacing between membranes. The spacers may be conventional water filtration spacers or three-dimensional printed spacers.

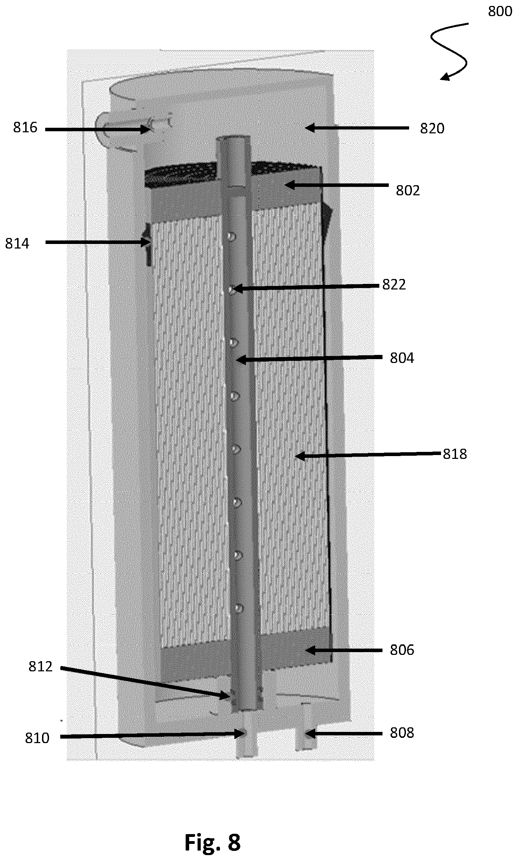

Turning to FIG. 8, another example is provided. In this example, a filter cartridge assembly 800 illustratively includes a housing 820 for a purification or concentration filtration application, a membrane assembly 818 with at least one membrane having a plurality of carbon nanotubes (CNTs) for filtering out impurities from a received flow of fluid, and a permeate device 804, such as a tube, with openings 820 for collecting filtered fluid (permeate). Housing 820 illustratively includes a feed fluid inlet 808 for receiving a flow of fluid, a feed fluid outlet 816 for dispensing the feed fluid, and a permeate outlet 810 for expelling filtered fluid (permeate) from permeate tube 804. While the inlets and outlets are illustratively shown at defined points along housing 820, it is to be understood that such components may be reversed or positioned at other locations along housing 820 as well. To securely fasten and position membrane assembly 818 and permeate tube 804 within housing 820, any number of gaskets and seals may be used e.g., a rubber seal 814 and O-rings 812.

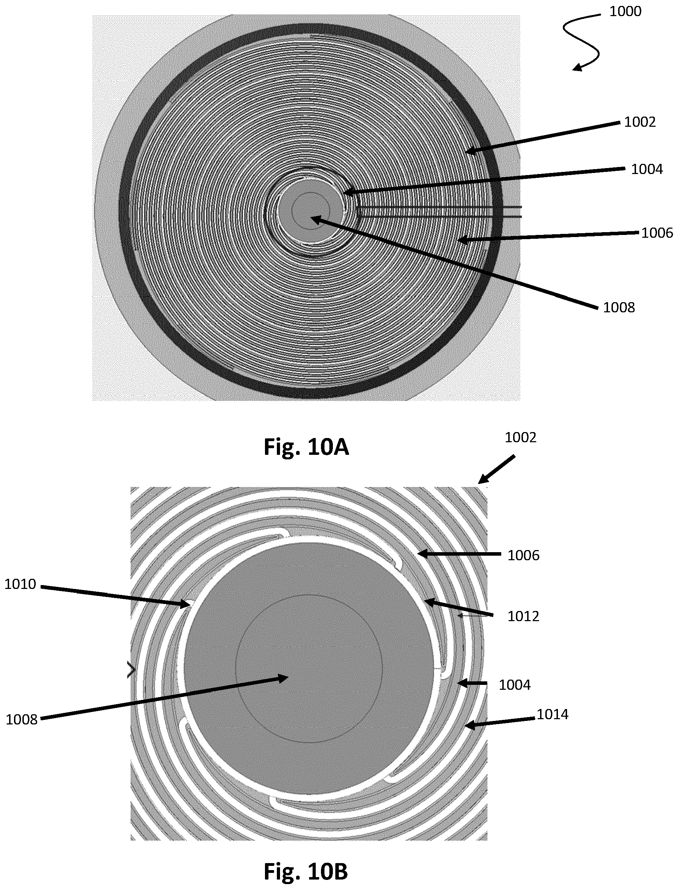

In operation, cartridge assembly 800 may be positioned at any point in a filtration operation and used to substantially filter out impurities, unwanted particulates, or contaminants from a received flow of fluid to produce a high purity permeate or filtered fluid. For example, a fluid with unwanted particulates may pass through feed fluid inlet 808 and contact membrane assembly 818. Membrane assembly 818, once presented with the fluid, may separate out undesirable constituents from the received flow of fluid through principles of selective permeation. For example, as noted and discussed above, membrane assembly 818 may include a membrane with a plurality of CNTs that selectively allow for a transportation (or permeation) of fluid across a membrane without unwanted particulates, e.g., viruses, bacteria, ions, etc. Once across, filtered fluid (permeate) may be aggregated and provided to any number of downstream applications. For example, permeate may pass into a spacing layer, e.g., a mesh, a 3D printed pattern, etc., positioned in-between the membranes and into openings 822 of permeate tube 804 as will be discussed in FIGS. 10A and 10B. Once inside, such permeate may be expelled through permeate outlet 810 of housing 820 into a downstream filtration application.

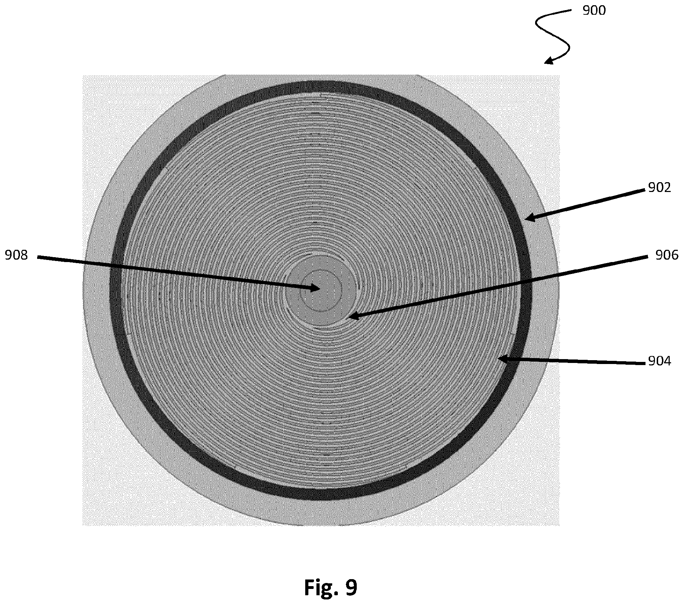

To prevent an intermixing of permeate with a flow of fluid, membrane assembly 818 may be sealed on every side of cartridge 800 except for a side attached to permeate tube 804. In one example, this includes the use of glue areas 802 and 806 to prevent an intermixing of permeate with a flow of fluid. For example, FIG. 9 illustratively shows a top view section of a cartridge assembly 900 with a membrane assembly 902 and a glue area 904 in accordance with an example. In this example, membrane assembly 902 illustratively includes spiral arms 906 wrapped around a permeate tube 908. While seven spiral arms 906 are illustratively shown formed of two membrane sheets each, it is expressly contemplated that any number of spiral arms and membrane sheets may be used. Membrane assembly 902 further includes glue 904 in-between each arm 906 that, in one example, prevents an intermixing of a received fluid flow with permeate. For example, while a flow of fluid may contact a top portion of glue area 802 or a bottom portion of glue area 806, as can be seen illustratively in FIG. 8, such fluid cannot penetrate or access a spacing layer positioned in-between each arm 906.

This arrangement is further shown in FIGS. 10A and 10B. Specifically, FIG. 10A illustratively shows a top view section of a cartridge assembly 1000 without a glue area, e.g., a top view beneath glue area 802. As shown, a membrane assembly 1002 includes a plurality of spiral arms (membranes) 1004 wrapped around a permeate tube 1008. Spaced in-between each spiral arm 1004 is a spacing layer 1006, e.g., a mesh or 3D printed pattern, for receiving and directing filtered fluid (permeate) to permeate collection tube 1008. In turn, filtered fluid may be supplied to a downstream application through permeate collection tube 1008.

FIG. 10B illustratively shows an inner tube arrangement in accordance with an example. As shown in FIG. 10B, membrane assembly 1002 illustratively includes several spiral arms 1004 wrapped around permeate tube 1008. While seven arms are illustratively shown, it is to be understood that any number of arms may be used. Each arm 1004 includes two membranes sheets 1014 with a plurality of CNTs for selectively filtering out unwanted contaminants, impurities, or particulates from a received flow of fluid. In one example, CNTs may be present on either or both sides of membrane sheets 1014 so that permeate can pass through either side of arm 1004 and into a spacing layer 1006. Spacing layer 1006, in one example, follows a similar spiral pattern of arms 1004 and terminates in openings 1010. Openings 1010 may align with corresponding holes or openings in a permeate collection tube 1008 to allow for an aggregation of permeate within tube 1008. Additionally, a feed spacer 1012 may also be included on a top or bottom portion of membrane assembly 1002 to facilitate an interaction between arms 1006 and a received fluid.

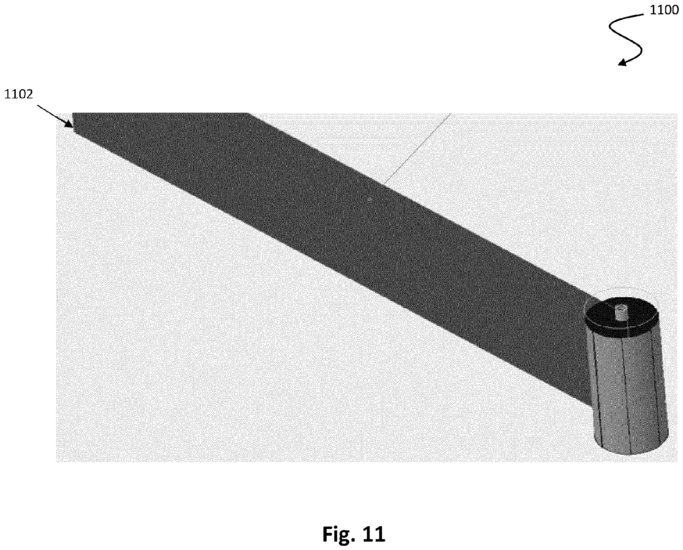

FIG. 11 illustratively shows an external surface area of a cartridge assembly 1100 along with a surface area of a membrane assembly 1102. As discussed above, in operation, membrane assembly 1102 may be sealed shut (glued) on three sides except for a side attached to a collection tube, e.g., collection 1008, to isolate permeate from a received flow of fluid. In one example, a surface area of membrane assembly 1102 may be 263,900 mm². However, other surface dimensions are contemplated as well. In any of the embodiments described above, the filter cartridge can optionally include an additional cartridge to add minerals, vitamins, flavors, and/or potentially other supplements to improve the taste and/or provide wellness benefits that may not have been present in the original water source, or may have been removed from the filtered water. In one example, a center portion of filter cartridges in any of FIGs. 4, 5, and 6 can support a cylindrical cartridge containing one or more of these supplements. Alternatively, or in addition to, this supplemental cartridge can be integrated to or attached to an outlet which dispenses the filtered water from the filter cartridge.

As discussed above, one or more of the cartridges with CNT membranes can be used in a variety of applications including, but not limited to, residential, industrial, and commercial applications, and can be used alone or in any combination and with or without other filtering technologies.

Various examples of systems, devices, and methods have been described herein. These examples are given only by way of example and are not intended to limit the scope of the claimed inventions. It should be appreciated, moreover, that the various features of the examples that have been described may be combined in various ways to produce numerous additional examples. Moreover, while various materials, dimensions, shapes, configurations, and locations, etc. have been described for use with disclosed examples, others besides those disclosed may be utilized without exceeding the scope of the claimed inventions.

Persons of ordinary skill in the relevant arts will recognize that the subject matter hereof may comprise fewer features than illustrated in any individual example described above. The examples described herein are not meant to be an exhaustive presentation of the ways in which the various features of the subject matter hereof may be combined. Accordingly, the examples are not mutually exclusive combinations of features; rather, the various examples can comprise a combination of different individual features selected from different individual examples, as understood by persons of ordinary skill in the art. Moreover, elements described with respect to one example can be implemented in other examples even when not described in such examples unless otherwise noted.

Although a dependent claim may refer in the claims to a specific combination with one or more other claims, other examples can also include a combination of the dependent claim with the subject matter of each other dependent claim or a combination of one or more features with other dependent or independent claims. Such combinations are proposed herein unless it is stated that a specific combination is not intended.

Any incorporation by reference of documents above is limited such that no subject matter is incorporated that is contrary to the explicit disclosure herein. Any incorporation by reference of documents above is further limited such that no claims included in the documents are incorporated by reference herein. Any incorporation by reference of documents above is yet further limited such that any definitions provided in the documents are not incorporated by reference herein unless expressly included herein.

For purposes of interpreting the claims, it is expressly intended that the provisions of 35 U.S.C. § 112(f) are not to be invoked unless the specific terms "means for" or "step for" are recited in a claim.

## Claims

1. A carbon nanotube filter cartridge for purification and concentration filtration for residential and commercial applications, comprising:
a cartridge frame configured to be removably coupled to a filtration application to receive a flow of fluid; and
a membrane assembly coupled to an interior of the cartridge frame comprising at least one membrane, the at least one membrane comprising a plurality of carbon nanotubes aligned by electrokinetic methods to allow for a selective permeation of the fluid through the surface of the at least one membrane.

2. The carbon nanotube filter cartridge of claim 1, wherein the impurities comprise at least one of ions, metals, inorganic, organic, or biological contaminants and the selective permeation of fluid provides for permeate along a hollow interior of the at least one membrane.

3. The carbon nanotube filter cartridge of claim 1 or claim 2, wherein the at least one membrane comprises a plurality of membranes and the permeate is configured to be aggregated across the plurality of membranes and provided to a downstream application of the filtration application, optionally wherein a spacing between the plurality of membranes comprises a distance of 0.5 mm or less.

4. The carbon nanotube filter cartridge of claim 1, claim 2 or claim 3: wherein the filtration application comprises a purification filtration application for at least one of: a kitchen faucet, a beverage faucet, a drinking fountain, a bottle filler, a refrigerator water dispenser, or an ice maker; or wherein the filtration application comprises an artesian water generator or a gravity filter application; or wherein the filtration application comprises at least one of: a steam generation bath, a humidifier, a water heater, a greywater treatment system, a toilet, urinal, bidet, a shower spray head, a shower faucet, a lavatory faucet, a bath filler, or a bathroom faucet.

5. The carbon nanotube filter cartridge of any one of the preceding claims, wherein the carbon nanotubes are aligned through electrokinetic methods and extend between a thickness of the membrane, wherein each nanotube includes a first end terminating at a first surface of the membrane and a second end terminating at a second opposite surface of the membrane.

6. The carbon nanotube filter cartridge of claim 3, or any one of claims 4 to 5 when dependent on claim 3, wherein: each membrane of the plurality of membranes comprises a hollow fiber having a circular cross section; or each membrane of the plurality of membranes comprises a hollow fiber having a cross section defining an equilateral triangle or an isosceles triangle.

7. The carbon nanotube filter cartridge of any one of the preceding claims, wherein the membrane assembly comprises a plurality of flat membranes arranged as a layered assembly.

8. The carbon nanotube filter cartridge of any one of the preceding claims, further comprising:
a cartridge coupled to the membrane assembly configured to provide at least one supplement to the aggregated permeate prior to the permeate being provided to the downstream application of the filtration application.

9. A carbon nanotube filter cartridge for purification and concentration filtration for residential and commercial applications, comprising:
a cartridge frame configured to be removably coupled to a filtration application to receive a flow of fluid; and
a membrane assembly coupled to the cartridge frame comprising at least one leaf pattern membrane, the at least one leaf pattern membrane comprising a plurality of carbon nanotubes aligned by electrokinetic methods configured to selectively separate impurities from the flow of fluid through transportation of fluid into an interior of the at least one leaf pattern membrane.

10. The carbon nanotube filter cartridge of claim 9, wherein the leaf pattern membrane comprises a continuous pleat coupled to an entire inner circumference of the cartridge frame.

11. The carbon nanotube filter cartridge of claim 9 or claim 10, wherein the at least one leaf pattern membrane comprises a plurality of leaf pattern membranes and the membrane assembly further comprises:
a plurality of spacers positioned along an interior and exterior of the plurality of leaf pattern membranes to provide sufficient spacing for the selective transport of the fluid.

12. The carbon nanotube filter cartridge of claim 9, claim 10 or claim 11, further comprising:
a structure coupled to an interior of the cartridge frame configured to physically support the at least one leaf pattern membrane; and
a permeate space configured to aggregate and provide the flow of fluid from the interior of the at least one leaf pattern membrane to a downstream application of the filtration application.

13. A carbon nanotube filter cartridge for purification and concentration filtration for residential and commercial applications, comprising:
a cartridge frame configured to be removably coupled to a filtration application and receive a flow of fluid through a feed fluid inlet; and
a membrane assembly coupled to an interior of the cartridge frame, the membrane assembly comprising at least one spiral arm, the at least one spiral arm comprising at least one membrane sheet with a plurality of carbon nanotubes aligned by electrokinetic methods for selectively separating impurities from the flow of fluid.

14. The carbon nanotube filter cartridge of claim 13, further comprising:
a permeate collection device coupled to the cartridge frame configured to receive and provide a filtered flow of fluid from a spacing layer to a permeate outlet.

15. The carbon nanotube filter cartridge of any one of the preceding claims, wherein the membrane is configured to be back-flushed to improve a lifespan of the filter cartridge.
